# EUROPEAN PATENT SPECIFICATION

(11) **EP 4 234 290 B1**
(45) Date of publication and mention of the grant of the patent: **23.10.2024**
(21) Application number: 23159230.4
(22) Date of filing: 28.02.2023
(51) Int. Cl.: B60H 1/00, B60H 1/32

(54) **TRANSPORT REFRIGERATION SYSTEM POWERED BY A FUEL CELL**
TRANSPORTKÜHLSYSTEM ANGETRIEBEN DURCH EINE BRENNSTOFFZELLE
SYSTÈME DE RÉFRIGÉRATION DE TRANSPORT ALIMENTÉ PAR UNE PILE À COMBUSTIBLE

(30) Priority: 28.02.2022 CN 202210184855
(43) Date of publication of application: 30.08.2023
(73) Proprietor: Carrier Corporation, Palm Beach Gardens, FL 33418 (US)
(72) Inventor: NIGRO, Matthew, Palm Beach Gardens, FL 33418 (US); VAN HASSEL, Bart, Palm Beach Gardens, FL 33418 (US); SIENEL, Tobias, Syracuse, NY 13221 (US); BUSHNELL, Peter, NY 13221, Syracuse (US); JOARDAR, Arindom, Syracuse, NY 13221 (US); HUANG, Wei, Shanghai, 201206 (CN)
(74) Representative: Dehns

(56) References cited:
- EP-A1- 3 750 725
- EP-A1- 3 756 915
- EP-A2- 1 279 907

## Description

### BACKGROUND

Embodiments of the present invention relate to refrigeration systems, and more particularly, to transport refrigeration systems operating in high temperature ambient conditions.

Refrigerated trucks, trailers, and containers are commonly used to transport perishable cargo, such as, for example, produce, meat, poultry, fish, dairy products, cut flowers, pharmaceuticals and other fresh or frozen perishable products. Conventionally, transport refrigeration systems include a trailer refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The components of the trailer refrigeration unit must be powered during transit by an onboard power source. In existing systems, the onboard power source typically comprises a diesel engine operable to drive the compressor. A liquid coolant system including a radiator is normally used to pass heat from the engine to ambient. Since it is desirable to reduce emissions by eliminating the use of such an engine, refrigeration units powered by electric sources are being developed. Although a fuel cell may provide a viable option as a power source, difficulties arise with dissipating the waste heat generated by the fuel cell, especially in high temperature ambient conditions.

EP 3756915 A1 discloses a refrigeration system comprising an electrically powered trailer refrigeration unit including a refrigeration circuit, which is supplied with electrical energy by a fuel cell. EP 1279907 A2 and EP 3750725 A1 also disclose electrically powered transportation refrigeration units.

### BRIEF DESCRIPTION

According to an embodiment of the present invention there is provided a refrigeration system as set out in independent claim 1.

Optionally, a first end of both the condenser and the radiator is positioned adjacent to a front of the housing.

Optionally, the condenser and the radiator are stacked along a vertical axis.

Optionally, the condenser is arranged above the radiator along the vertical axis.

Optionally the condenser is arranged below the radiator along the vertical axis.

Optionally, the condenser and the radiator are stacked along a horizontal axis.

Optionally, the condenser is arranged left of the radiator along the horizontal axis.

Optionally, the condenser is arranged right of the radiator along the horizontal axis.

Optionally, a depth of the radiator is equal to or less than the depth of the condenser.

Optionally, the coolant circuit is arranged in fluid communication with the fuel cell.

Optionally, the fuel cell is arranged at least partially within the housing.

Optionally, the radiator further comprises a plurality of radiator coils arranged in series relative to the flow of unconditioned ambient air.

Optionally, the trailer refrigeration unit further comprises a condenser fan assembly arranged in fluid communication with both the condenser and the radiator.

Optionally, a temperature of the coolant at the outlet of the radiator is controlled via at least one of a flow rate of the coolant and a speed of the condenser fan assembly.

The condenser and the radiator may be arranged in parallel relative to a flow of unconditioned ambient air.

### BRIEF DESCRIPTION OF THE DRAWINGS

The following descriptions should not be considered limiting in any way. With reference to the accompanying drawings, like elements are numbered alike:
FIG. 1 is a perspective view of an exemplary transport refrigeration system;
FIG. 2 is a schematic illustration of an exemplary trailer refrigeration unit of a transport refrigeration system;
FIG. 3 is a front view of an exemplary trailer refrigeration unit;
FIG. 4 is a side view of the trailer refrigeration unit of FIG. 3;
FIG. 5 is a front view of another exemplary trailer refrigeration unit; and
FIG. 6 is a front view of another exemplary trailer refrigeration unit.

### DETAILED DESCRIPTION

A detailed description of one or more embodiments of a refrigeration system is presented herein by way of exemplification and not limitation with reference to the Figures.

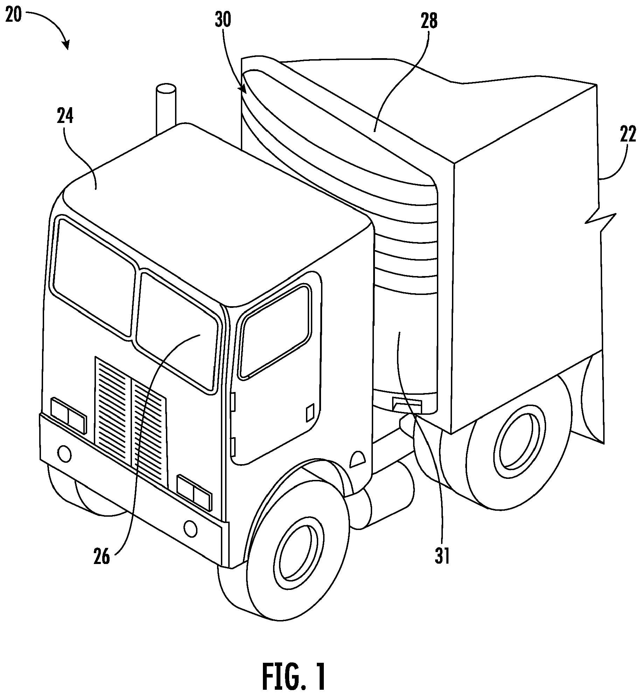

With reference now to FIG. 1, an exemplary transport refrigeration system 20 is illustrated. In the illustrated, non-limiting embodiment, the transport refrigeration system 20 is shown as a trailer system. As shown, the refrigerated container system 20 includes a cargo container or trailer 22 being towed or otherwise transported by a tractor 24 including an operator's compartment or cab 26 and also including an engine or other power source, such as a fuel cell for example, which acts as the drivetrain system of the system 20. A trailer refrigeration unit 30 is configured to maintain cargo located within the container 22 at a selected temperature by cooling the cargo space of the container 22. As shown, the trailer refrigeration unit 30 is typically mounted at the front wall 28 of the container 22. Together, the trailer refrigeration unit 30 and the cargo container 22 may form a refrigerated container system. It should be appreciated by those of skill in the art that embodiments described herein may be applied to any transport refrigeration system such as, for example shipping containers that are shipped by rail, sea (via a watercraft), or any other suitable container, without use of a tractor 24.

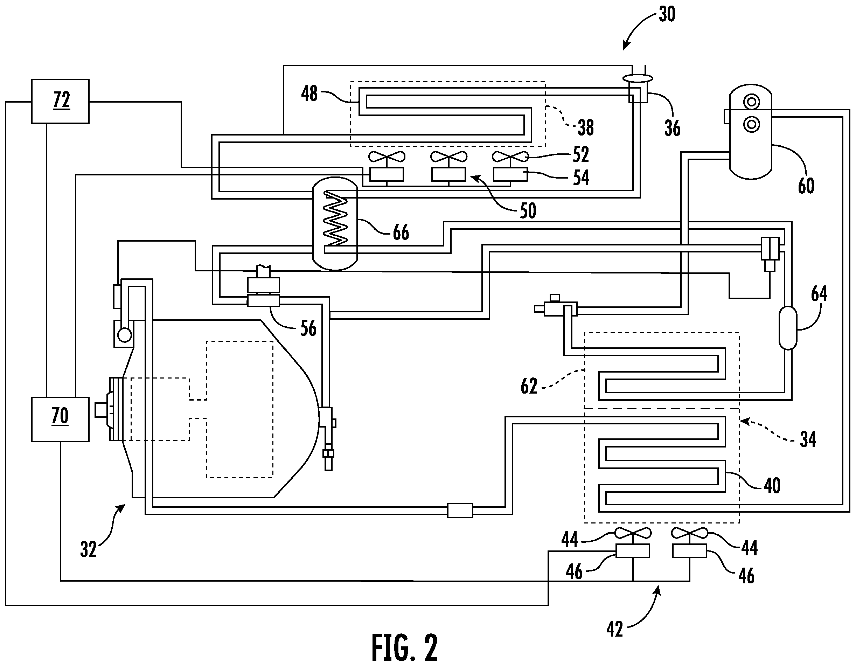

With reference now to FIG. 2, a schematic diagram of an exemplary trailer refrigeration unit 30 is illustrated. The trailer refrigeration unit 30 includes a compressor 32, a heat rejection heat exchanger or condenser 34, an expansion valve 36, and a heat absorption heat exchanger or evaporator 38. During operation of the trailer refrigeration unit 30, refrigerant R enters the compressor 32 and is compressed to a higher temperature and pressure. From the outlet of the compressor 32, the refrigerant gas is then provided to the condenser 34. The condenser 34 is an air cooled condenser such that a flow of air across the condenser coils 40 cools the refrigerant gas R to its saturation temperature. By removing latent heat, the refrigerant gas within the condenser 34 condenses to a high pressure/high temperature liquid. The air flow across the condenser 34 is energized by a condenser fan assembly 42 including one or more fans 44, such as two fans for example. As shown, each fan 44 may be driven by a separate fan motor 46.

In a trailer refrigeration unit 30 having a basic vapor compression cycle, the flow output from the condenser 34 is provided directly to a thermostatic expansion valve 36 and evaporator 38. As the liquid refrigerant R passes through the orifice of the expansion valve 36, some of it vaporizes into a gas. Return air from the refrigerated space flows over the heat transfer surface of an evaporator 38. As refrigerant flows through tubes 48 in the evaporator 38, the remaining liquid refrigerant R absorbs heat from the return air, and in so doing, is vaporized. The air flow across the evaporator 38 may be energized by an evaporator fan assembly 50 including at least one fan 52 and a corresponding fan motor 54. From the evaporator 38, the vapor then flows through a suction modulation valve 56 back to an inlet of the compressor 32. In an embodiment, a thermostatic expansion valve bulb or sensor (not shown) is located at an evaporator outlet tube. The bulb is intended to control the thermostatic expansion valve 36, thereby controlling refrigerant superheating at the evaporator outlet tubing.

In the illustrated, non-limiting embodiment, the trailer refrigeration unit 30 includes a plurality of components arranged between the condenser 34 and the expansion valve 36. As shown, a receiver 60 is arranged directly downstream from the outlet of the condenser 34. The receiver 60 is configured to provide storage for excess liquid refrigerant during low temperature operation. From the receiver 60, the liquid refrigerant R may pass through a subcooler heat exchanger 62. The subcooler 62 may be arranged in-line with and downstream from the condenser 34 such that the air flow from the fan assembly 42 moves across the condenser 34 and the subcooler 62 in series. In an embodiment, at the outlet of the subcooler 62, the refrigerant R is provided to a filter dryer 64 that keeps the refrigerant cool and dry, and in some embodiments to a heat exchanger 66 that increases the refrigerant subcooling. In such embodiments, the refrigerant provided at the outlet of this heat exchanger 66 is delivered to the thermostatic expansion valve 36.

The trailer refrigeration unit 30 includes a power source 70 that is capable of powering all of the electric components of the trailer refrigeration unit 30. Such components include, but are not limited to the electric motor associated with the compressor 32, and the fan motors 46,54 associated with both the condenser 34 and the evaporator 38 fan assemblies 42, 50. The power source 70 may include a single fuel cell, or alternatively a plurality of fuel cells, suitable to provide enough power for all of the dynamic components of the trailer refrigeration unit 30. In an embodiment, the fuel cell provides AC power as needed. The power source 70 may be located remotely from the remainder of the trailer refrigeration unit 30, or alternatively, may be arranged within the housing 31 (FIG. 1) of the trailer refrigeration unit 30.

A controller 72, such as a microprocessor, may be programmed to control power usage and the operation of various electrically powered components within the system 20. For example, the controller 72 may be operable to regulate the power supplied to the condenser fan motors 46 and the evaporator fan motors 54. Programming such controllers is within the skill in the art.

The power source 70 operable to drive the compressor 32 and the other electric components of the trailer refrigeration unit 30 typically requires some method of cooling to prevent excessive temperature therein. In conventional refrigeration units, such as units where the power source is an internal combustion engine, a coolant circuit including a radiator fluidly coupled with the power source is positioned directly behind the condenser coil such that when the condenser fan assembly is driven, the cooling air flows through the condenser and the radiator in series. Accordingly, the cooled coolant output from the radiator is typically returned to the power source to remove further heat therefrom. However, when such a configuration is used to cool a power source 70 including one or more fuel cells in an environment having a high ambient temperature, such as above about 25°C, about 30°C, about 35°C, or even about 40°C for example, the radiator may not be capable of rejecting a sufficient amount of heat. This may force the fuel cell to operate at limited power (i.e., to reduce heat generation) in order to avoid overheating the fuel cell.

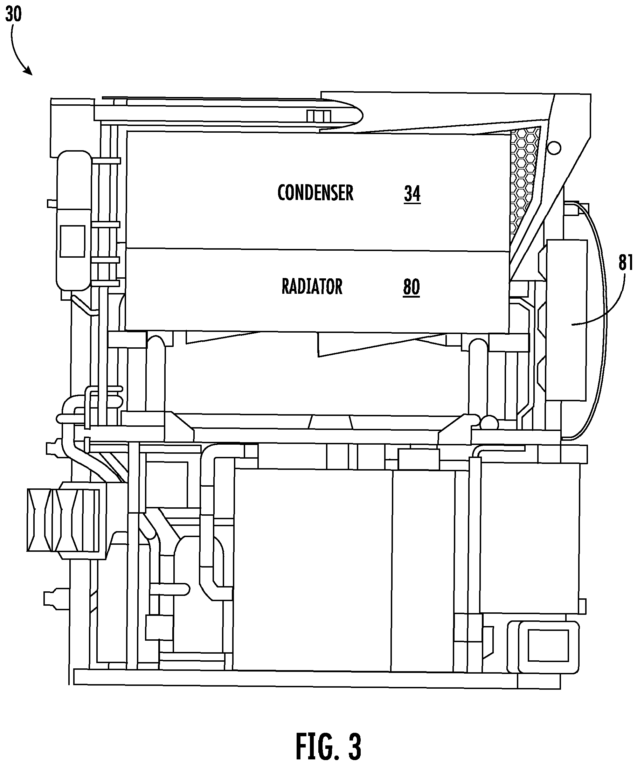

In an embodiment, the controller 72 is operable to control the temperature of the coolant provided at the outlet of the radiator 80, such as by controlling a flow rate of the coolant and/or by controlling a speed of the condenser fan 44. With reference now to FIGS. 3-5, in the illustrated, non-limiting embodiment of the trailer refrigeration unit 30, a radiator 80 is arranged in parallel with the condenser 34 relative to the flow of air driven by the one or more condenser fans 44. In the illustrated, non-limiting embodiment, the radiator 80 is part of a high-temperature cooling loop. However, the transport refrigeration unit 30 may additionally include at least one radiator 81 associated with a low-temperature cooling loop. In an embodiment, the one or more axial condenser fans 44 aligned about a horizontal axis is positioned within the housing 31, downstream from both the condenser 34 and the radiator 80 such that the condenser fans 44 have a draw-through configuration.

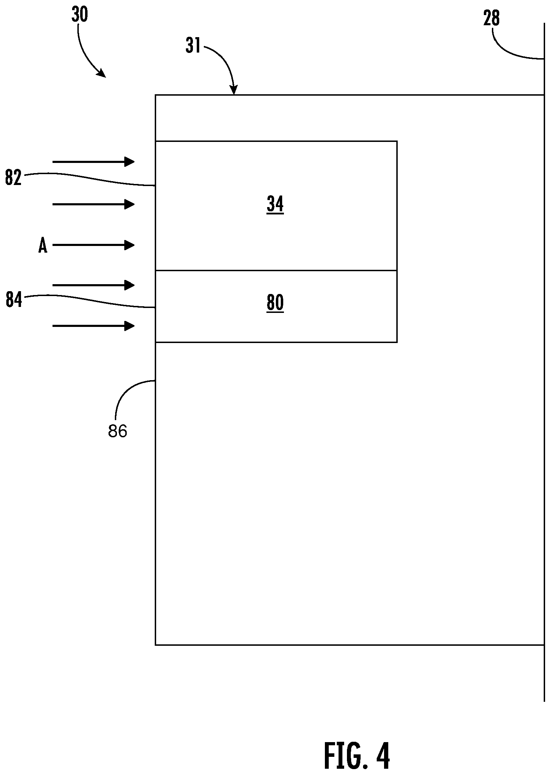

As shown in Fig, 4, a first end 82, 84 of each of the condenser 34 and the radiator 80, respectively, is arranged at or adjacent to a front end 86 of the housing 31 of the trailer refrigeration unit 30 such that a flow of ambient air A is provided directly thereto. In the illustrated, non-limiting embodiment shown in FIGS. 3 and 4, the condenser 34 and the radiator 80 are stacked relative to one another along a vertical axis (e.g., side-by-side, in parallel). Although the condenser 34 is shown as being positioned above the radiator 80, it should be understood that embodiments where the condenser 34 is positioned beneath the radiator 80 are also contemplated herein.

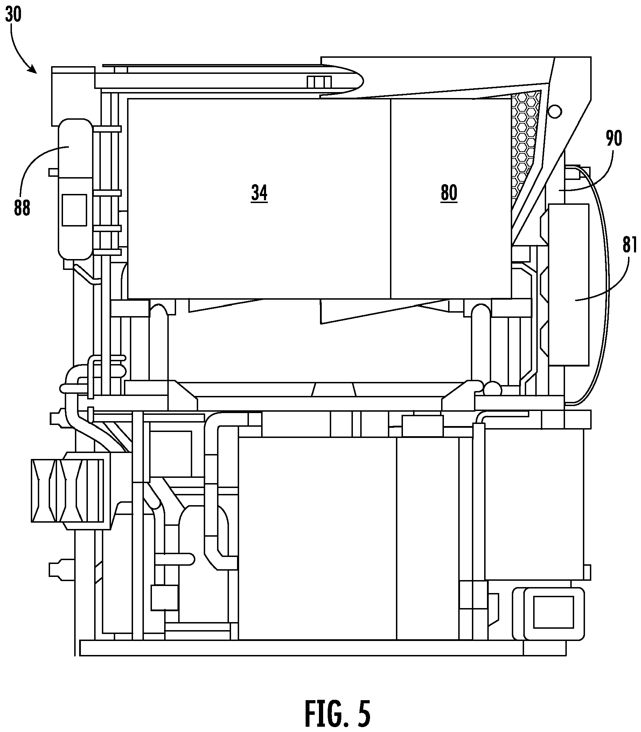

In another embodiment, illustrated in FIG. 5, the condenser 34 and the radiator 80 are stacked relative to one another along a horizontal axis (e.g., side-by-side, in parallel). Although the condenser 34 is illustrated as being positioned generally adjacent a left side 88 of the housing 31 and the radiator 80 is illustrated as being positioned generally adjacent to a right side 90 of the housing 31, embodiments where the radiator 80 is near the left side 88 of the housing 31 and the condenser 34 is near the right side 90 of the housing 31 are also within the scope of the present invention.

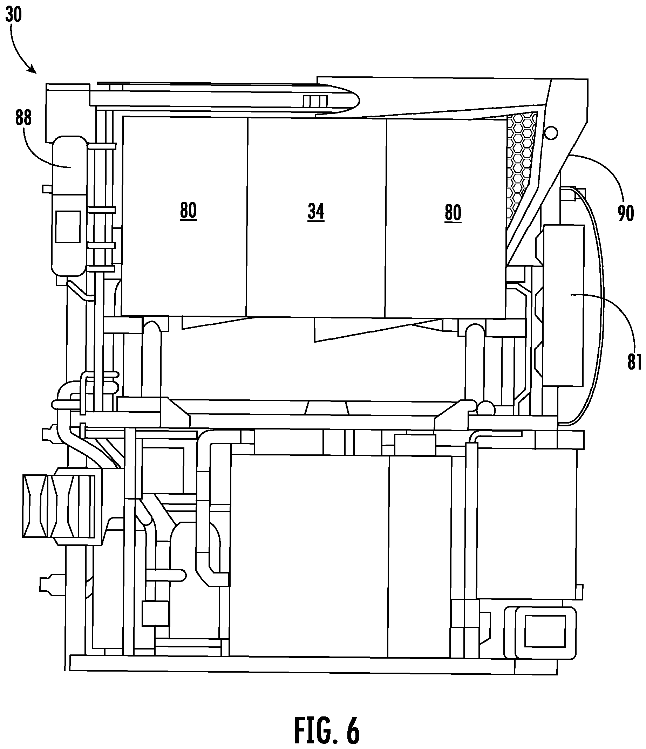

With reference now to FIG. 6, in yet another embodiment, the radiator 80 may include a plurality of coils, and the condenser 34 may be arranged centrally (either vertically or horizontally) between a first and second radiator coil such that air flow is provided to each of the condenser and the first and second radiator coils 80 in parallel. Further, it should be understood that embodiments where the condenser 34 is separated into a first portion and a second portion, and the radiator 80 is disposed centrally (either vertically or horizontally) between the first and second portion, respectively are also contemplated herein.

Because at least one dimension, such as the height, or alternatively, the width (measured between the left and right sides 88, 90 of the housing 31) of each of the condenser 34 and the radiator 80 has been significantly reduced compared to prior art systems, another dimension of the condenser 34 and the radiator 80 may be increased to achieve a necessary heat exchange surface area. In an embodiment, a depth of both the condenser 34 and the radiator 80 has been extended to achieve the required surface area. The total depth of the condenser 34 and the radiator 80 may be determined in part by the constraints of the available space within the housing 31 of the trailer refrigeration unit 3 0.

Further, the radiator 80 may include a single radiator coil, or in some embodiments, may include a plurality of radiator coils fluidly coupled to one another and arranged in series relative to the air flow A. Although the depth of the condenser 34 and the total depth of the one or more radiators 80 may be the same, as shown in FIG. 4, embodiments where the depth of the radiator 80 is different than the depth of the condenser 34, such as less than the depth of the condenser 34 for example, are also contemplated herein.

A refrigeration unit having both a condenser 34 and a radiator 80 positioned to receive a direct flow of unconditioned, ambient air will increase the ability of the radiator 80 to reject heat. This enhanced heat rejection will allow for operation of the refrigeration unit, and specifically of the fuel cell power source during higher ambient temperature conditions.

The term "about" is intended to include the degree of error associated with measurement of the particular quantity based upon the equipment available at the time of filing the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to exemplary embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiments disclosed, but that the present invention will include all embodiments falling within the scope of the claims.

## Claims

1. A refrigeration system (20) comprising:
a trailer refrigeration unit (30) including a housing (31), and a refrigerant circuit through which a refrigerant is circulated, the refrigerant circuit including a condenser (34);
a fuel cell configured to generate electrical power for the trailer refrigeration unit (30); and
a coolant circuit;
**characterized in that** the coolant circuit includes a radiator (80), the radiator (80) configured to dissipate heat generated by the fuel cell, wherein the condenser (34) and the radiator (80) are positioned such that each of the condenser (34) and the radiator (80) receives a flow of unconditioned ambient air;
the condenser (34) and the radiator (80) are positioned within the housing (31); and
the trailer refrigeration unit (30) further comprises at least one condenser fan (44) operable to move the flow of unconditioned ambient air across the condenser (34) and the radiator (80).

2. The refrigeration system (20) of claim 1, wherein a first end (82, 84) of both the condenser (34) and the radiator (80) is positioned adjacent to a front of the housing (31).

3. The refrigeration system (20) of claim 1 or 2, wherein the condenser (34) and the radiator (80) are stacked along a vertical axis, optionally:
wherein the condenser (34) is arranged above the radiator (80) along the vertical axis; or
wherein the condenser (34) is arranged below the radiator (80) along the vertical axis.

4. The refrigeration system (20) of claim 1 or 2, wherein the condenser (34)
and the radiator (80) are stacked along a horizontal axis, optionally:
wherein the condenser (34) is arranged left of the radiator (80) along the horizontal axis; or
wherein the condenser (34) is arranged right of the radiator (80) along the horizontal axis.

5. The refrigeration system (20) of any of claims 1 to 4, wherein a depth of the radiator (80) is equal to or less than the depth of the condenser (34).

6. The refrigeration system (20) of any of claims 1 to 5, wherein the coolant circuit is arranged in fluid communication with the fuel cell.

7. The refrigeration system (20) of any of claims 1 to 6, wherein the fuel cell is arranged at least partially within the housing (31).

8. The refrigeration system (20) of any preceding claim, wherein the radiator (80) further comprises a plurality of radiator coils arranged in series relative to the flow of unconditioned ambient air.

9. The refrigeration system (20) of any preceding claim, wherein the trailer
refrigeration unit (30) further comprises a condenser fan assembly (42) arranged in fluid communication with both the condenser (34) and the radiator (80).

10. The refrigeration system (20) of claim 9, wherein a temperature of the
coolant at the outlet of the radiator (80) is controlled via at least one of a flow rate of the coolant and a speed of the condenser fan assembly (42).

11. The refrigeration system (20) of any preceding claim, wherein the
condenser (34) and the radiator (80) are arranged in parallel relative to a flow of unconditioned ambient air.

## Patentansprüche

1. Kühlsystem (20), Folgendes umfassend:
eine Anhängerkühleinheit (30), beinhaltend ein Gehäuse (31) und einen Kühlmittelkreislauf, durch den ein Kühlmittel zirkuliert, wobei der Kühlmittelkreislauf einen Kondensator (34) beinhaltet;
eine Brennstoffzelle, die konfiguriert ist, um elektrische Energie für die Anhängerkühleinheit (30) zu erzeugen; und
einen Kühlmittelkreislauf;
**dadurch gekennzeichnet, dass** der Kühlmittelkreislauf einen Kühler (80) beinhaltet, wobei der Kühler (80) konfiguriert ist,
um durch die Brennstoffzelle erzeugte Wärme abzuleiten, wobei der Kondensator (34) und der Kühler (80) so positioniert sind,
dass jeder von dem Kondensator (34) und dem Kühler (80) eine Strömung von nicht klimatisierter Umgebungsluft empfängt;
der Kondensator (34) und der Kühler (80) innerhalb des Gehäuses (31) positioniert sind; und
die Anhängerkühleinheit (30) ferner mindestens ein Kondensatorgebläse (44) umfasst, das betreibbar ist, um die Strömung nicht klimatisierter Umgebungsluft über den Kondensator (34) und den Kühler (80) zu bewegen.

2. Kühlsystem (20) nach Anspruch 1, wobei ein erstes Ende (82, 84) sowohl des Kondensators (34) als auch des Kühlers (80) benachbart zu einer Vorderseite des Gehäuses (31) positioniert ist.

3. Kühlsystem (20) nach Anspruch 1 oder 2, wobei der Kondensator (34) und der Kühler (80) entlang einer vertikalen Achse gestapelt sind, optional:
wobei der Kondensator (34) über dem Kühler (80) entlang der vertikalen Achse angeordnet ist; oder
wobei der Kondensator (34) unter dem Kühler (80) entlang der vertikalen Achse angeordnet ist.

4. Kühlsystem (20) nach Anspruch 1 oder 2, wobei der Kondensator (34) und der Kühler (80) entlang einer horizontalen Achse gestapelt sind, optional:
wobei der Kondensator (34) links von dem Kühler (80) entlang der horizontalen Achse angeordnet ist; oder
wobei der Kondensator (34) rechts von dem Kühler (80) entlang der horizontalen Achse angeordnet ist.

5. Kühlsystem (20) nach einem der Ansprüche 1 bis 4, wobei eine Tiefe des Kühlers (80) gleich der Tiefe des Kondensators (34) oder kleiner als diese ist.

6. Kühlsystem (20) nach einem der Ansprüche 1 bis 5, wobei der Kühlmittelkreislauf in Fluidkommunikation mit der Brennstoffzelle angeordnet ist.

7. Kühlsystem (20) nach einem der Ansprüche 1 bis 6, wobei die Brennstoffzelle mindestens teilweise innerhalb des Gehäuses (31) angeordnet ist.

8. Kühlsystem (20) nach einem der vorhergehenden Ansprüche, wobei der Kühler (80) ferner eine Vielzahl von Kühlerspulen umfasst, die relativ zu der Strömung nicht klimatisierter Umgebungsluft in Reihe angeordnet ist.

9. Kühlsystem (20) nach einem der vorhergehenden Ansprüche, wobei die Anhängerkühleinheit (30) ferner eine Kondensatorgebläseanordnung (42) umfasst, die in Fluidkommunikation sowohl mit dem Kondensator (34) als auch mit dem Kühler (80) angeordnet ist.

10. Kühlsystem (20) nach Anspruch 9, wobei eine Temperatur des Kühlmittels an dem Auslass des Kühlers (80) über mindestens eine von einer Strömungsrate des Kühlmittels und einer Drehzahl der Kondensatorgebläseanordnung (42) gesteuert wird.

11. Kühlsystem (20) nach einem der vorhergehenden Ansprüche, wobei der Kondensator (34) und der Kühler (80) relativ zu einer Strömung nicht klimatisierter Umgebungsluft parallel angeordnet sind.

## Revendications

1. Système de réfrigération (20) comprenant :
une unité de réfrigération de remorque (30) comportant un boîtier (31) et un circuit de réfrigérant à travers lequel circule un réfrigérant, le circuit de réfrigérant comportant un condenseur (34) ;
une pile à combustible configurée pour générer de l'énergie électrique pour l'unité de réfrigération de remorque (30) ; et
un circuit de refroidissement ;
**caractérisé en ce que** le circuit de refroidissement comporte un radiateur (80), le radiateur (80) étant configuré pour dissiper de la chaleur générée par la pile à combustible, dans lequel le condenseur (34) et le radiateur (80) étant positionnés de sorte que chacun du condenseur (34) et du radiateur (80) reçoit un écoulement d'air ambiant non conditionné ;
le condenseur (34) et le radiateur (80) sont positionnés à l'intérieur du boîtier (31) ; et
l'unité de réfrigération de remorque (30) comprend également au moins un ventilateur de condenseur (44) pouvant déplacer l'écoulement d'air ambiant non conditionné à travers le condenseur (34) et le radiateur (80).

2. Système de réfrigération (20) selon la revendication 1, dans lequel une première extrémité (82, 84) du condenseur (34) et du radiateur (80) est positionnée adjacente à une partie avant du boîtier (31).

3. Système de réfrigération (20) selon la revendication 1 ou 2, dans lequel le condenseur (34) et le radiateur (80) sont empilés le long d'un axe vertical, éventuellement :
dans lequel le condenseur (34) est agencé au-dessus du radiateur (80) le long de l'axe vertical ; ou
dans lequel le condenseur (34) est agencé sous le radiateur (80) le long de l'axe vertical.

4. Système de réfrigération (20) selon la revendication 1 ou 2, dans lequel le condenseur (34) et le radiateur (80) sont empilés le long d'un axe horizontal, éventuellement :
dans lequel le condenseur (34) est agencé à gauche du radiateur (80) le long de l'axe horizontal ; ou
dans lequel le condenseur (34) est agencé à droite du radiateur (80) le long de l'axe horizontal.

5. Système de réfrigération (20) selon l'une quelconque des revendications 1 à 4, dans lequel la profondeur du radiateur (80) est égale ou inférieure à la profondeur du condenseur (34).

6. Le Système de réfrigération (20) selon l'une quelconque des revendications 1 à 5, dans lequel le circuit de refroidissement est agencé en communication fluidique avec la pile à combustible.

7. Le Système de réfrigération (20) selon l'une quelconque des revendications 1 à 6, dans lequel la pile à combustible est agencée au moins partiellement à l'intérieur du boîtier (31).

8. Système de réfrigération (20) selon une quelconque revendication précédente, dans lequel le radiateur (80) comprend également une pluralité de bobines de radiateur agencées en série par rapport à l'écoulement d'air ambiant non conditionné.

9. Système de réfrigération (20) selon une quelconque revendication précédente, dans lequel l'unité de réfrigération de remorque (30) comprend également un ensemble ventilateur de condenseur (42) agencé en communication fluidique avec le condenseur (34) et le radiateur (80).

10. Système de réfrigération (20) selon la revendication 9, dans lequel une température du liquide de refroidissement au niveau de la sortie du radiateur (80) est commandée via au moins l'un d'un débit du liquide de refroidissement et d'une vitesse de l'ensemble ventilateur de condenseur (42).

11. Système de réfrigération (20) selon une quelconque revendication précédente, dans lequel le condenseur (34) et le radiateur (80) sont agencés en parallèle par rapport à un écoulement d'air ambiant non conditionné.
